# EUROPÄISCHE PATENTSCHRIFT

(11) **EP 0 972 725 B1**
(45) Veröffentlichungstag und Bekanntmachung des Hinweises auf die Patenterteilung: **21.08.2002**
(21) Anmeldenummer: 99110817.6
(22) Anmeldetag: 05.06.1999
(51) Int. Cl.: B65D 88/00

(54) **Siloanlage**
Silo installation
Installation à silo

(30) Priorität: 15.07.1998 DE 19831818
(43) Veröffentlichungstag der Anmeldung: 19.01.2000
(73) Patentinhaber: Windmöller & Hölscher, D-49525 Lengerich (DE)
(72) Erfinder: Anstötz, Peter, 49525 Lengerich (DE)

(56) Entgegenhaltungen:
- DE-A- 2 830 592

## Beschreibung

Die Erfindung betrifft eine Anlage zum Beschicken mindestens einer Sackabfüllmaschine und/oder mindestens eines LKWs mit rieselfähigem Gut nach dem Oberbegriff des Anspruchs 1.

Derartige Anlagen werden bereits gebaut.

In der Druckschrift GB-PS-13 49 252 wird ein Vorratssilo für Streusalz gezeigt, aus dem die Steufahrzeuge mit Streusalz beladen werden körinen. Um das Silo zu befüllen und nachzufüllen ist ein Becherförderer vorgesehen, der auf Fahrbahnniveau angeliefertes Streusalz in das Silo hinaufbefördert.

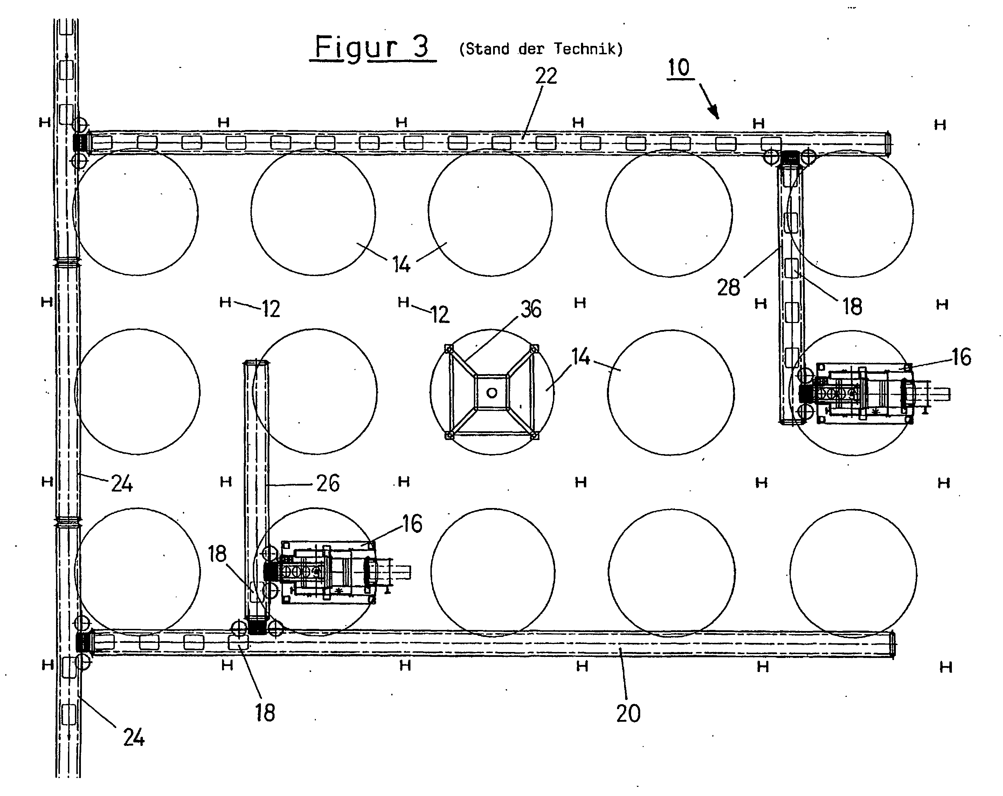

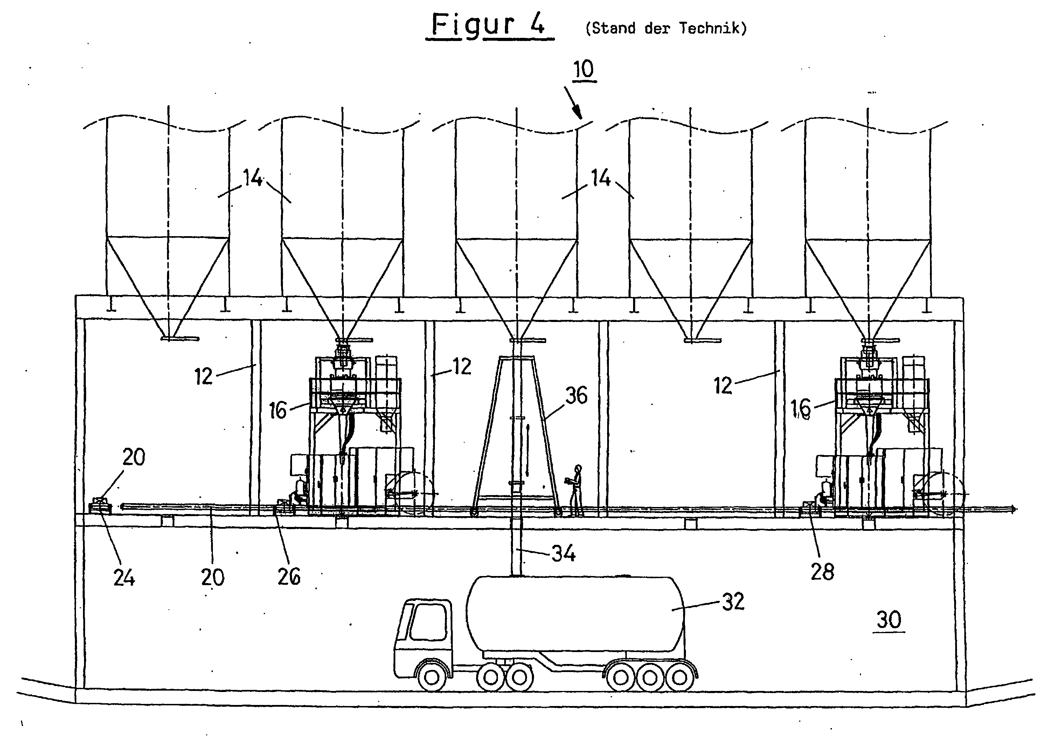

Jedoch sind mittlerweile auch andere, komplexere Anlagen nach dem Oberbegriff des Anspruchs 1 bekannt. Anhand der Fig. 3 und der Fig. 4 wird der Aufbau einer solchen Anlage beschrieben. Die Fig. 3 zeigt eine Draufsicht und die Fig. 4 eine teilweise geschnittene Seitenansicht einer entsprechenden Anlage.

Die Anlage 1 0 weist eine Vielzahl von mit Stützen 12 abgefangene fest zueinander angeordnete Silos 14 zur Aufnahme von rieselfähigem Gut auf. Unterhalb der Silos 14 sind verfahrbar Sackabfüllmaschinen 16 angeordnet, die unter Auslässe vorbestimmter Silos fahrbar sind, um Schüttgut aufzunehmen und in bekannter Art und Weise in Säcke abzufüllen. Die von den Sackabfüllmaschinen befüllten Säcke 18 werden über Transportbänder abtransportiert. Hierzu sind zwei parallel über die gesamte Länge der nebeneinander angeordneten Silos verlaufende Transportbänder 20, 22 angeordnet, die senkrecht auf die Säcke 20 übernehmende Transportbänder 24 zulaufen. Den Transportbändern 20 und 22 werden die von den Sackfüllmaschinen befüllten Säcke über senkrecht zu den Transportbändern 20 und 22 angeordnete und über die Länge der Transportbänder 20 und 22 verfahrbare Zwischenförderer 26, 28 aufgenommen und den Transportbändern 20 und 22 zugefördert. Wie der Fig. 4 zu entnehmen ist, sind die Transportbänder 20, 22, 24, 26 und 28 in Höhe der Abgabestation der Sackfüllmaschine angeordnet. Über die Silos können wahlweise auch LKWs befüllt werden. Hierzu ist eine eigens hierfür vorgesehene Durchfahrtsebene 30 für LKWs 32 unterhalb der Ebene, in der die Sackabfüllmaschinen verfahrbar angeordnet sind, vorgesehen. Die LKWs 32 werden über entsprechende Rohrleitungen 34, die gegebenenfalls über verfahrbare Gestelle 36 gesichert werden können, wie dies in Fig. 4 gezeigt ist, befüllt.

Diese vorbekannte Anlage hat den Nachteil, daß sie in drei Geschoßebenen angeordnet ist und daher sehr groß baut. In der oberen Geschoßebene sind die fest zueinander angeordneten Silos vorgesehen, in der mittleren Geschoßebene sind die Sackabfüllmaschinen verfahrbar angeordnet und in der unteren Geschoßebene können die LKWs einfahren. Darüber hinaus können die Sackabfüllmaschinen in der mittleren Ebene nicht immer auf dem kürzesten Weg zu dem gewünschten Siloauslaß verfahren werden, da hier die entsprechenden Förderbänder im Wege stehen.

Aufgabe der Erfindung ist es daher, eine Anlage an die Hand zu geben, mit der mindestens eine Sackabfüllmaschine und/oder mindestens ein LKW mit rieselfähigem Gut beschickt werden kann, wobei diese Anlage vergleichsweise kleiner baut und wobei die LKWs bzw. die Sackabfüllmaschinen schnell und auf kurzem Weg zu dem jeweilig gewünschten Siloauslaß gefahren werden können.

Erfindungsgemäß wird diese Aufgabe ausgehend von einer gattungsgemäßen Anlage durch die Kombination mit den zusätzlichen Merkmalen gemäß dem kennzeichnenden Teil des Anspruchs 1 gelöst. Demnach ist der der mindestens einen Abfüllmaschine zugeordnete mindestens eine Zwischenförderer zumindest bereichsweise als verfahrbarer Höhenförderer ausgebildet. Das Abwurfende des Zwischenförderers korrespondiert in Arbeitsposition mit einem der Abförderbänder, die oberhalb der benötigten Durchfahrthöhe angeordnet sind, die für das Verfahren der mindestens einen Sackabfüllmaschine bzw. des mindestens einen LKWs erforderlich ist. Aufgrund dieser Lösung, in der sämtliche Förderbänder aus der Verfahrebene für die Sackabfüllmaschine heraus nach oben verlagert worden ist, ist es nunmehr möglich, eine ganze Ebene einzusparen. Aufgrund der erfindungsgemäßen Lösung ist es nämlich möglich, daß die LKWs in der gleichen Ebene unter die Siloauslässe fahren, in der die Sackabfüllmaschinen verfahren werden können. Darüber hinaus ist es möglich, daß die Sackabfüllmaschinen auf dem kürzesten Weg zu den Siloauslässen gefahren werden können.

Besondere Ausführungsvarianten der Erfindung ergeben sich aus den sich an den Hauptanspruch anschließenden Unteransprüchen.

Demnach kann jeder Abfüllmaschine ein mit dieser verbundener Höhenförderer zugeordnet sein, der gemeinsam mit dieser verfahrbar ist.

Der Höhenförderer kann höhenverlagerbar mit der Abfüllmaschine verbunden sein. Alternativ können die jeweilige Abfüllmaschine und der ihr zuzuordnende Höhenförderer getrennt voneinander verfahrbar sein.

Weitere Einzelheiten und Vorteile ergeben sich aus einem in der Zeichnung dargestellten Ausführungsbeispiel. Es zeigen:
- Fig. 1:: eine Seitenansicht einer erfindungsgemäßen Anlage gemäß einem Ausführungsbeispiel,
- Fig. 2:: eine Draufsicht auf die Anlage gemäß Fig. 1,
- Fig. 3:: eine Draufsicht auf eine Anlage gemäß dem Stand der Technik und
- Fig. 4:: eine Seitenansicht einer Anlage nach dem Stand der Technik gemäß Fig. 3.

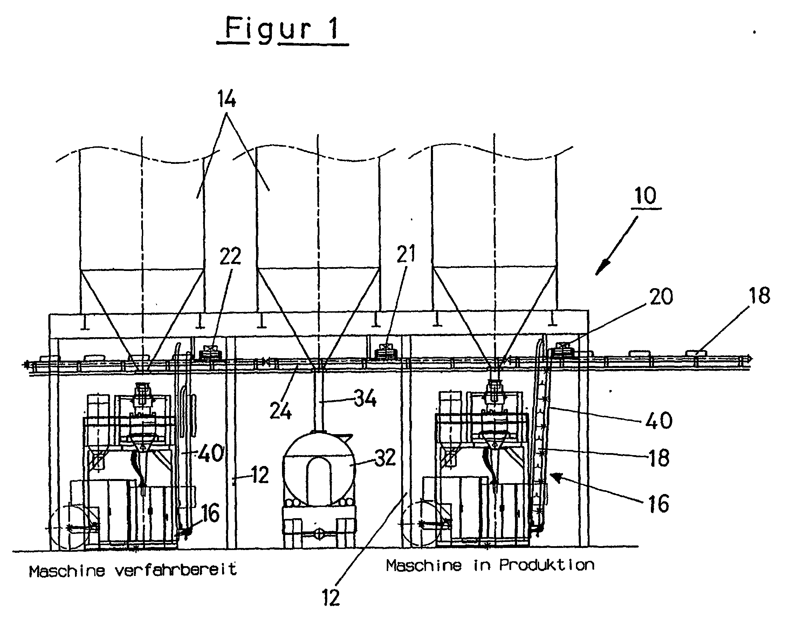

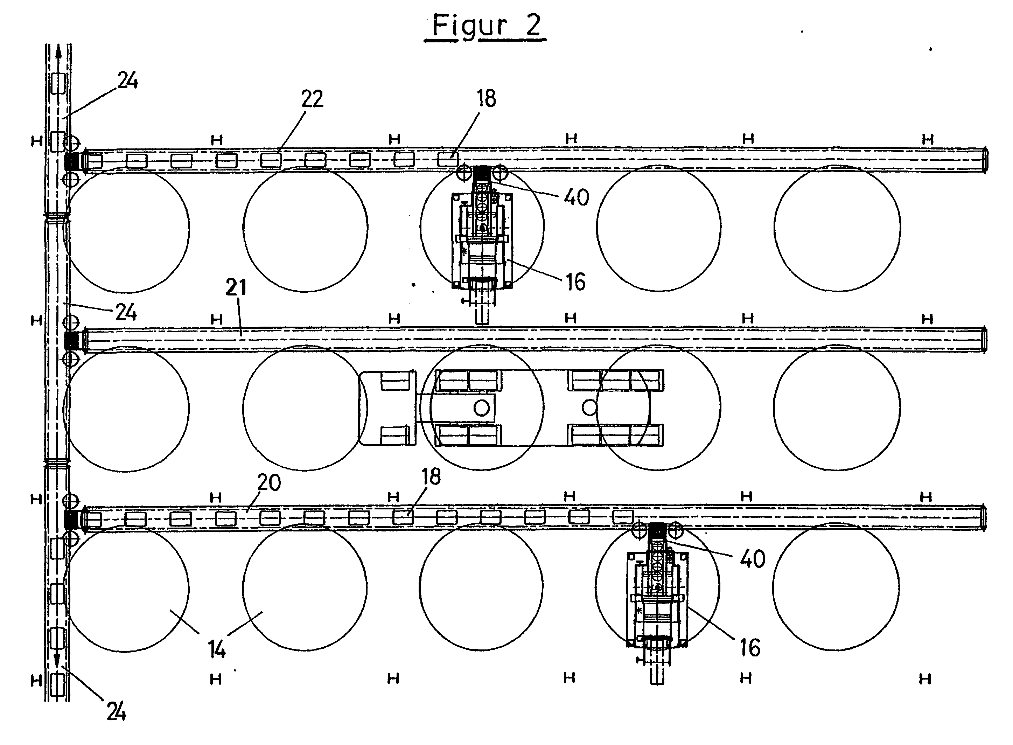

In den Fig. 1 und 2 ist ein Ausführungsbeispiel der hier vorgestellten Erfindung dargestellt. Die Anlage 10 weist eine Vielzahl von mit Stützen 12 abgefangene Silos 14 auf. Die Stützen 12 bauen so hoch, daß unterhalb der fest zueinander zugeordneten Silos 14 genügend Raum zum Verfahren von Sackabfüllmaschinen 16 bzw. zum Durchfahren von LKWs 32 ist.

Wie der Fig. 2 zu entnehmen, sind die Silos 14 in parallelen Reihen zueinander angeordnet, wobei im hier dargestellten Ausführungsbeispiel drei parallele Reihen mit fünf nebeneinander in gleichen Abständen angeordneten Silos 14 gebildet sind. Parallel zu den Siloreihen sind Abförderbänder 20, 21 und 22 angeordnet, die zu den senkrecht zu diesen angeordneten Abförderbändern 24 die in den Sackabfüllmaschinen abgefüllten Säcke 18 zufördern.

Wie der Fig. 1 zu entnehmen ist, sind die Abförderbänder 20, 21, 22 und 24 oberhalb der benötigten Durchfahrthöhe angeordnet, die für das Verfahren der Sackabfüllmaschinen 16 bzw. der LKWs 32 notwendig ist. Von den Sackabfüllmaschinen werden die befüllten Säcke, die im unteren Bereich der Sackabfüllmaschinen 16 fertig befüllt und verschlossen aus der Sackabfüllmaschine austreten über im vorliegenden Ausführungsbeispiel mit der Sackabfüllmaschine unmittelbar verbundene Höhenförderern 40 den Abförderbändern 20, 21 bzw. 22 zugeführt. Zwischen den Sackabfüllmaschinen 16 kann problemlos auch ein LKW 32 zur Befüllung unter einen Siloauslaß eines vorher gewählten Silos 14 gefahren werden und mit einer Befüllrohrleitung 34 mit dem entsprechenden Siloauslaß verbunden werden, wie dies in Fig. 1 dargestellt ist.

In der Fig. 1 ist im rechten Teil der Darstellung eine Sackabfüllmaschine 16 gezeigt, die mit einem Siloauslaß verbunden ist und Säcke 18 befüllt und über den Höhenförderer zu dem Abförderband 20 zuführt. Im linken Teil der Fig. 1 ist eine Abfüllmaschine 16 gezeigt, die bereits von dem Silo getrennt ist und die in verfahrbereiter Position ist. Die Abfüllmaschinen können in an sich bekannter Art und Weise verfahren werden. Gemäß der erfindungsgemäßen Ausführungsform sind die Abförderbänder beim Verfahren der Sackabfüllmaschine nicht mehr im Wege, so daß die Sackabfüllmaschinen 16 auf dem kürzesten Weg der jeweiligen Abfüllöffnung des gewünschten Silos zugeordnet werden können.

In einer hier nicht näher dargestellten Ausführungsvariante können die Höhenförderer auch getrennt von den Abfüllmaschinen 16 angeordnet sein und nur im Bedarfsfalle mit diesen verbunden werden.

## Patentansprüche

1. Anlage (2) zum alternativen Beschicken mindestens einer Sackabfüllmaschine und/oder mindestens eines LKWs mit rieselfähigem Gut, welches in einer Vielzahl von mit Stützen abgefangenen (12) fest zueinander angeordneten Silos (14) gespeichert ist, wobei sowohl der mindestens eine LKW (32) und/oder die mindestens eine Sackabfüllmaschine (16) unter gewünschte Siloauslässe (34) fahrbar sind, und wobei die Säcke (18) nach ihrer Befüllung von der Abfüllanlage (10) aus über einen ganz oder teilweise wegfahrbaren Zwischenförderer auf eines von mehreren Abförderbändern (20, 21, 22) transportierbar sind,
**dadurch gekennzeichnet,**
**daß** der der mindestens einen Abfüllmaschine (16) zugeordnete mindestens eine Zwischenförderer zumindest bereichsweise als verfahrbarer Höhenförderer (40) ausgebildet ist, dessen Abwurfende in Arbeitsposition mit einem der Abförderbänder (20, 21, 22) korrespondiert, die oberhalb der benötigten Durchfahrthöhe angeordnet sind, die für das Verfahren der mindestens einen Sackabfüllmaschine (16) bzw. des mindestens einen LKWs erforderlich ist.

2. Anlage nach Anspruch 1, **dadurch gekennzeichnet, daß** jeder Abfüllmaschine (16) ein mit dieser verbundener Höhenförderer (40) zugeordnet ist, der gemeinsam mit dieser verfahrbar ist.

3. Anlage nach Anspruch 1 oder 2, **dadurch gekennzeichnet, daß** der Höhenförderer (16) höhenverlagerbar mit der Abfüllmaschine verbunden ist.

4. Anlage nach Anspruch 1, **dadurch gekennzeichnet, daß** die mindestens eine Abfüllmaschine (16) und der Höhenförderer (40) getrennt voneinander verfahrbar sind.

## Claims

1. Installation (2) for alternatively charging at least one sack-filling machine and/or at least one lorry with free-flowing material which is stored in a multiplicity of silos (14) which are propped up by supports (12) and are fixed in relation to one another, it being possible both for the at least one lorry (32) and/or the at least one sack-filling machine (16) to be moved beneath desired silo outlets (34), and it being possible for the sacks (18), once they have been filled, to be transported from the filling installation (10), via an intermediate conveyor which can be moved away in whole or in part, onto one of a plurality of removal conveying belts (20, 21, 22), **characterized in that** the at least one intermediate conveyor, which is assigned to the at least one filling machine (16), is designed, at least in certain regions, as a displaceable vertical conveyor (40), the ejecting ends of which correspond, in the operating position, with one of the removal conveying belts (20, 21, 22), these belts being arranged above the required clearance height which is necessary for the displacement of the at least one sack-filling machine (16) and/or of the at least one lorry.

2. Installation according to Claim 1, **characterized in that** each filling machine (16) is assigned a vertical conveyor (40) which is connected to it and can be displaced together with it.

3. Installation according to Claim 2, **characterized in that** the vertical conveyor (16) is connected in a vertically displaceable manner to the filling machine.

4. Installation according to Claim 1, **characterized in that** the at least one filling machine (16) and the vertical conveyor (40) can be displaced separately from one another.

## Revendications

1. Installation (2) pour l'alimentation alternative d'au moins une machine d'ensachage et/ou d'au moins un camion avec un produit coulant, qui est stocké dans une pluralité de silos (14) soutenus par des montants (12), disposés fixement les uns aux autres, où à la fois au moins un camion précité (32) et/ou au moins une machine d'ensachage (16) sont déplaçables sous des évacuations de silo souhaitées (34), et où les sacs (18) après leur remplissage par l'installation d'ensachage (10) peuvent être transportés par un convoyeur intermédiaire pouvant être partiellement ou totalement éloigné sur l'une de plusieurs bandes d'évacuation (20, 21, 22), **caractérisée en ce qu'**au moins un convoyeur intermédiaire précité, associé à au moins une machine d'ensachage précitée (16) est réalisé au moins par zones comme convoyeur élévateur déplaçable (40) dont l'extrémité d'éjection, en position de travail, correspond à l'une des bandes d'évacuation (20, 21, 22) qui sont disposées au-dessus de la hauteur de passage nécessaire qui est requise pour le déplacement d'au moins une machine d'ensachage (16) précitée respectivement d'au moins un camion précité.

2. Installation selon la revendication 1, **caractérisée en ce qu'**il est associé à chaque machine d'ensachage (16) un convoyeur élévateur (40) relié à celle-ci, qui est déplaçable conjointement avec celle-ci.

3. Installation selon la revendication 1 ou 2, **caractérisée en ce que** le convoyeur élévateur (16) est relié d'une manière déplaçable en hauteur à la machine d'ensachage.

4. Installation selon la revendication 1, **caractérisée en ce qu'**au moins une machine d'ensachage précitée (16) et le convoyeur élévateur (40) sont déplaçables séparément l'un de l'autre.
